# EUROPEAN PATENT SPECIFICATION

(11) **EP 0 314 807 B1**
(45) Date of publication and mention of the grant of the patent: **27.01.1993**
(21) Application number: 88904261.0
(22) Date of filing: 12.05.1988
(51) Int. Cl.: C04B 35/58

(54) **MOLTEN METAL CONTAINER**
BEHÄLTER FÜR GESCHMOLZENES METALL
RECIPIENT POUR METAL EN FUSION

(30) Priority: 12.05.1987 JP 116627/87; 23.07.1987 JP 113676/87 U; 21.12.1987 JP 325007/87
(43) Date of publication of application: 10.05.1989
(73) Proprietor: KABUSHIKI KAISHA KOURANSHA, Saga-ken 844 (JP)
(72) Inventor: NAKASHIMA, Masazumi Kabushiki Kaisha Kouransha, Nishimatsuura-gun Saga-ken 844 (JP); KUSUMOTO, Mitsunori Kabushiki Kaisha Kouransha, Nishimatsuura-gun Saga-ken 844 (JP); KURITA, Sumihiko, Kishima-gun Saga-ken 849-23 (JP); NAKAMURA, Hiroshi Kabushiki Kaisha Kouransha, Nishimatsuura-gun Saga-ken 844 (JP); URA, Katsumi Kabushiki Kaisha Kouransha, Nishimatsuura-gun Saga-ken 844 (JP); MURATA, Akira Kabushiki Kaisha Kouransha, Nishimatsuura-gun Saga-ken 844 (JP)
(74) Representative: Silverman, Warren
(86) International application number: PCT/JP88/00453
(87) International publication number: WO 88/08831

(56) References cited:
- JP-A- 4 959 809
- JP-A- 6 131 360
- JP-A-56 164 075
- CHEMICAL ABSTRACTS, vol. 106, no. 4, 26th January 1987, abstract no. 22283d, Columbus, Ohio, US; & JP-A-61 117 107 (TOSHIBA TUNGALOY CO., LTD) 04-06-1986

## Description

The present invention relates to a use of boron nitride (BN) ceramic materials having excellent resistance to damage due to molten metal or other inorganic material.

It is known that BN ceramic materials have excellent anti-wetting properties against melts of metal, glass and the like. Though BN ceramic materials having excellent anti-wetting properties are commonly used in furnaces, in practice there are a number of factors militating against their use. A first factor is that when a member formed of the heretofore known BN ceramic material comes into contact with melts of metal, glass and the like, it is readily damaged by fusion. A second factor is that, because a member produced by sintering the heretofore known ceramic materials at atmospheric pressure does not last long in use, because of its too low strength, it is a common practice to manufacture a BN ceramic material member by hotpressing, and its manufacturing cost is thereby increased.

Furthermore, in order to measure continuously the temperature of a molten metal within a molten metal container, it is a common practice to utilise a thermocouple immersed in the molten metal. The thermocouple is inserted into a protective tube and it is placed in the molten metal jointly with the protective tube. However, in connection with the use of the protective tube, there are the following problems:
1) Since the protective tube in the prior art which is placed in contact with high temperature molten metal such as molten steel is liable to be eroded, continuous temperature measurement is difficult to guarantee.
2) In the conventional case, a protective tube is introduced into molten metal from the surface of the latter, and is held so as to be immovable by a holding member. With this procedure in the prior art, the length of protective tube used is large, and its wall thickness must be made sufficiently large so that the protective tube is not fractured by flow of the molten metal. Consequently, the protective tube becomes extremely expensive. In addition, the mechanism for holding and fixing the protective tube is complicated and handling thereof is intricate.

An object of the present invention is to provide a molten metal container, in which a mechanism for placing a protective tube in molten metal from its surface and holding it, as is the case with the prior art container, is made unnecessary.

According to the present invention there is provided a container for molten metal having associated means for providing a thermocouple within a body of molten metal in the container, characterised in that a refractory block is replaceably fitted in the wall of the container, the block having a through passage for housing a thermocouple and being closed off at the end within the container by a protective cap for a said thermocouple, the cap being formed of BN ceramic material containing 50 weight % or more of BN and 1 weight % or more and less than 50 weight % of AℓN.

According to the results of tests conducted by the inventors of this invention, if AℓN is contained in the BN ceramic material of the protective cap in the range of 1≦AℓN<50 weight %, with the ceramic material containing 50 weight % or more of BN, resistance of the ceramic material to fusion damage by melts of metal, glass and the like remarkably improved. If Y₂O₃ is added to this BN ceramics in an amount in the range of 1.0-10.0 weight % relative to AℓN, the strength of the ceramics is greatly improved. Moreover, if at least a part of starting material powder for the BN component contained in the BN ceramic material is prepared as amorphous BN powder or powder of material which produces amorphous BN in the course of sintering, the aforementioned strength improving effect is manifested particularly well.

The BN content in the BN ceramic material used in making the protective cap is 50 weight % or more. This is because if the BN content is chosen to be less than 50 weight %, the content of other ceramic components exceeds 50 weight % and their properties predominate, while the properties of BN are diluted, and problems arise, such as a tendency for the ceramic material to crack as a result of thermal impacts.

This also implies that the upper limit value for the AℓN content should be set at less than 50 weight %. The reason why the lower limit value for the AℓN content is set at 1 weight % is because at a content of less than 1 weight %, there is insufficient resistance to fusion damage by melts of metal, glass and the like. It is to be noted that AℓN powder or Aℓ powder that is converted to Aℓ in the course of sintering is used as raw material powder for AℓN.

The reason why the amount of Y₂O₃ which may be added to the BN ceramic material is defined as 1.0-10.0% in weight proportion with respect to AℓN, is because at less than 1.0% the strength improving effect is small, and if the amount exceeds 10.0%, a degradation in the strength of the BN ceramic material results.

When at least a part of all of the starting material powder for the BN component contained in the BN ceramic material is constituted by amorphous BN powder or powder of material that is converted to amorphous BN in the course of sintering, ceramic materials having high strength can be obtained, even by normal-pressure sintering. Elemental boron can be used at the material that can be converted to amorphous BN in the course of sintering. Amorphous BN or powder that can form amorphous BN should be preferably present in an amount of at least 20 weight % in the starting materials overall.

It is to be noted that while the ceramic materials used according to the present invention in making the protective cap include BN and AℓN as essential components, other oxides, nitrides, carbides, silicides, borides, etc. could be added appropriately within ranges not interfering with the defined contents for the essential components.

For a better understanding of the invention and to show how the same can be carried into effect, reference will be made hereinafter by way of example only, to the accompanying drawings, wherein:
Figure 1 is a diagram showing the relation between AℓN content in sintered BN ceramic material and the amount of fusion damage experienced when in contact with a melt;
Figure 2 is a cross-sectional view showing a part of a container for molten metal employing according to the present invention, a protective cap over a thermocouple for measuring molten metal temperature, the cap being made of BN ceramic material having a composition as specified herein;
Figure 3 is a like cross-sectional view showing a modification to the structure shown in Figure 2 and
Figure 4 is a further like cross-sectional view showing a modification to the structure shown in Figure 3.

To illustrate the physical properties of sintered BN ceramic materials as described herein in the presence of molten metals, the following experiments were carried out:

### Experiment 1

BN ceramic materials No. 1 - No. 5 of the predetermined shape having different AℓN contents (Table - 1) were prepared by sintering under a normal pressure at a temperature of 1800°C. It is to be noted that the K-value of the BN starting material used was in the range of 0≦K≦0.9

When a peak area for the index [hkl] corresponding to hexagonal crystalline BN in an X-ray diffraction pattern is represented by S[hkl], the K-value is defined as follows:$\text{K=s[102] / (S[100]+S[101])}$
(Cu-Kα line by PW-1710 manufactured by PHILIPS)

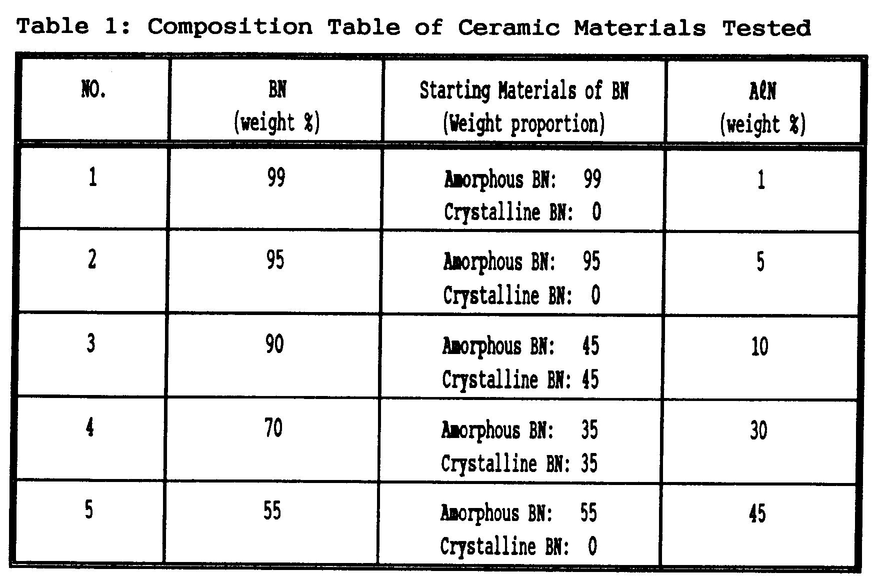

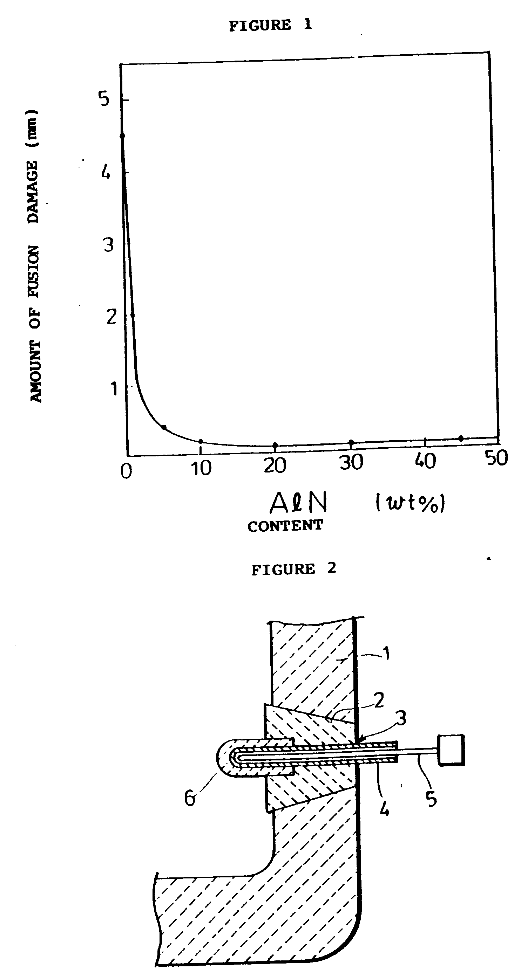

Samples No. 1 - No. 5 were placed in molten stainless steel (JIS SUS304 material) at a temperature of 1600°C ± 20°C so that their top portions projected above the surface of the molten metal, and the amount of fusion damage at the meniscus portion of the molten metal was measured. The results are shown in Figure 1.

According to Figure 1, it is seen that if the AℓN content becomes 1 weight % or more, the amount of fusion damage of the samples decreases sharply.

### Experiment 2

BN ceramic materials No. 6 - No. 10 of predetermined shape having different Y₂O₃ contents (Table - 2) were prepared by sintering under a normal pressure at a temperature of 1800°C. It is to be noted that the K-value of the starting material BN was in the range of 0≦K≦0.6. The K-value was determined according to the formula set out in Experiment 1.

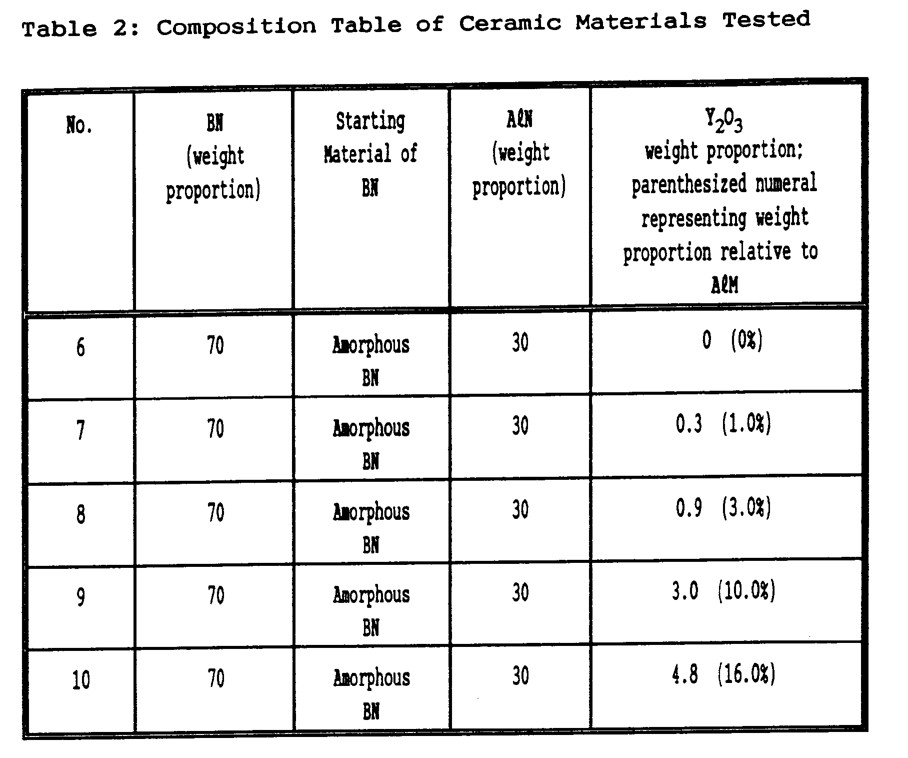

The bending strengths of samples No. 6 - No. 10 were investigated. The results are shown in Table - 3.

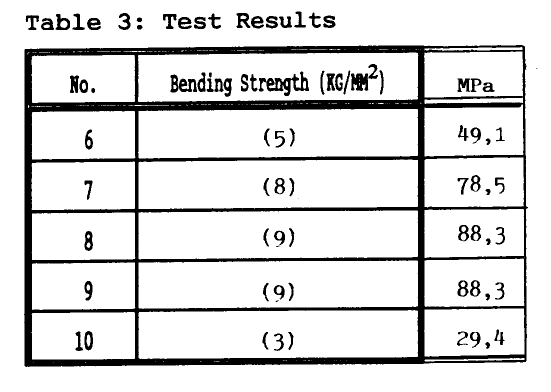

From the test results shown in Table - 3, it is seen that the bending strength of the BN ceramic materials was greatly improved at a weight proportion of Y₂O₃ relative to AℓN in the range of 1.0 - 10.0%.

Different embodiments of the invention will now be described.

A part of a molten metal container making use of a protective cap for a thermocouple for measuring a molten metal, which cap is made of BN ceramic material having a composition as specified herein for use according to the present invention, is shown in Figure 2. Reference numeral 1 denotes a part of a wall close to the bottom of the molten metal container. A refractory block 2 is fitted in the wall 1. The block 2 is a frusto-conical body having a central through-passage 3 and it is formed of, for example, zirconia refractory material (ZᵣO₂.SiO₂ or the like). The refractory block 2 is mounted with its end surface having the larger diameter directed towards the inside of the container so that it is pressed against the wall under the pressure of molten metal when molten metal has been poured into the container, whereupon a tight fitting relationship with respect to the wall 1 is achieved.

An alumina protective tube 4 for accommodating a thermocouple 5 is inserted into the through passage 3 in the refractory block 2 so as to pass therethrough. A protective cap 6 blocking the outlet end of the passage 3 (the end of the passage 3 which would otherwise be in contact with the molten metal) and covering the end portion of the protective tube 4, is mounted within the passage 3. This protective cap is formed of BN ceramic material consisting of, for example, 70 weight % of BN, 30 weight % of AℓN and 0.9 weight % of Y₂O₃ (weight proportion relative to AℓN being 3%). In addition, if a gap exists between the protective cap 6 and the refractory block 2, castable refractory material can be used as a sealing material. The protective tube 4 and the protective cap 6 are in intimate contact with each other, especially where the end portion of the tube 4 is concerned, and the end of the thermocouple 5 within the end portion of the protective tube is held in contact with the inner surface of the latter so that the heat of molten metal charged in the container is transmitted through the protective cap 6 and the protective tube 4 to the thermocouple 5.

The protective cap 6 formed of the aforementioned BN ceramic material can withstand continuous contact with molten metal for about 12 hours during which temperature measurement can be carried out reliably.

In the structure for mounting the thermocouple 5 in the wall 1 of a container for molten metal shown in Figure 2, the protective cap 6 to be used in place of the elongated protective tube of the prior art is short in length. This, in itself, is an economy. In addition, no complicated mechanism such as the mechanism used in the prior art for welding a protective tube for a thermocouple is needed. The work required for temperature measurement is extremely simple, and hence a saving of cost can be contemplated as a result of the reduced labour requirements.

Once the protective cap 6 has been consumed and can no longer withstand the further action of molten metal, it is only necessary to extract the refractory block 2 from the wall 1 with the container being empty and to replace it with a new refractory block/protective cap combination. Such servicing of the container can be carried out within a short period of time.

The term molten metal container used herein is to be interpreted to include, in addition to containers not having a melting function, such as a ladle, tundishes etc., containers having a melting function. The modified wall construction for continuous temperature measurement embodying this invention can be employed with all such containers.

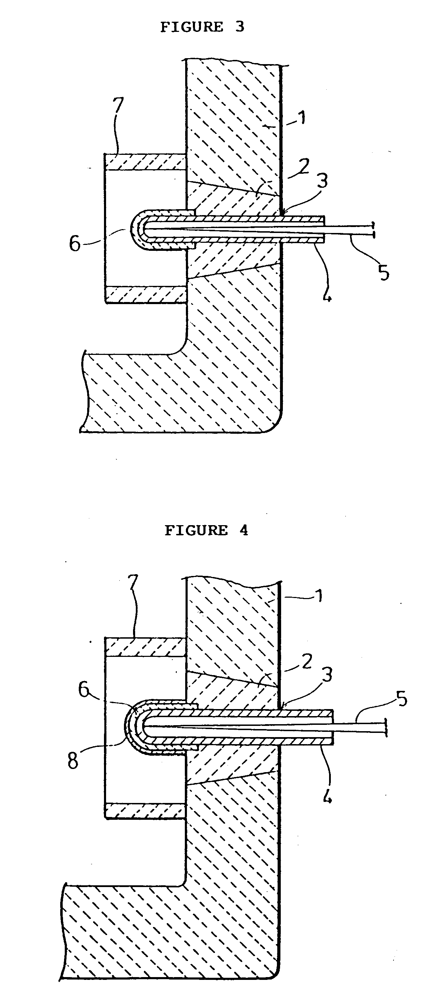

Figure 3 shows a modification of the arrangement of Figure 2 where, in addition, a dam 7 is employed. The dam 7 is a cylindrical body, which is fixed to the wall 1 and which surrounds the protective cap 6. When molten metal is poured into the container, if falling molten metal should directly strike against the protective cap 6, then there is a risk that the protective cap 6 may be fractured. The dam 7 serves to protect the protective cap 6 from impact by poured molten metal. In addition, the dam 7 protects the protective cap 6 from flow of molten metal and improves resistance to fusion damage of the protective cap 6. It is to be noted that the shape of the dam 7 need not be always cylindrical. It is only necessary that it have such a shape that it can protect the protective cap 6 from impact of poured molten metal or from flowing molten metal.

Figure 4 shows a further protective means for the protective cap 6 shown in addition to a dam 7. The outer surface of the protective cap 6 is covered by a glass coating 8. During the period when molten metal is being poured into the container and before the protective cap 6 is immersed in the molten metal, the protective cap 6 is exposed to radiant heat from the molten metal. Because the surface of the protective cap 6 has a tendency to become oxidized when the molten metal temperature is high, the oxidization reaction is now blocked off because the surface of the protective cap 6 is protected by the glass coating, and the durability of the protective cap 6 is improved. This glass coating 8 does not impede temperature measurement.

It is to be noted that in the above-described illustrated embodiments, it is possible to omit the protective tube 4.

The BN ceramic materials employed according to the present invention possess excellent resistance to fusion damage. Even a normal-pressure sintered BN ceramic material body has high strength, and moreover the cost of manufacture is low. Such materials can be used in manufacture of protective caps for thermocouples used with various kinds of furnaces, to come into contact with melts of metal, glass and the like, exhibiting excellent durability in all such cases.

## Claims

1. A container for molten metal having associated means for providing a thermocouple (5) within a body of molten metal in the container, characterised in that a refractory block (2) is replaceably fitted in the wall (1) of the container, the block (2) having a through passage (3) for housing a thermocouple (5) and being closed off at the end within the container by a protective cap (6) for a said thermocouple, the cap being formed of BN ceramic material containing 50 weight % or more of BN and 1 weight % or more and less than 50 weight % of AℓN.

2. A container as claimed in Claim 1, having additionally an alumina protective tube (4) for accommodating a said thermocouple (5) extending into the through passage (3), the end of the tube (4) within the container being covered by the protective cap (6).

3. A container as claimed in Claim 1 or 2, wherein the protective cap (6) has a glass coating (8) on its outer surface.

4. A container as claimed in any preceding claim, wherein the protective cap (6) is protected against impact stresses by an open tubular dam structure therearound.

5. A molten metal container as claimed in any preceding claim, wherein said BN ceramic material consists of 50 weight % or more of BN, 1 weight % or more and less than 50 weight % of AℓN and Y₂O₃ whose weight proportion relative to said AℓN content is 1.0 - 10.0%.

6. A molten metal container as claimed in any preceding claim, wherein a part or all of the starting material for the BN component in said ceramic material is amorphous BN powder.

7. A molten metal container as claimed in any one of Claims 1 to 5, wherein a part or all of the starting material for the BN component in said ceramic material is powder material which produces amorphous BN in the course of sintering.

## Patentansprüche

1. Ein Behälter für geschmolzenes Metall mit einer zugeordneten Einrichtung zum Bereitstellen eines Thermoelementes (5) innerhalb einer Masse geschmolzenen Metalls im Behälter, dadurch gekennzeichnet, daß ein feuerfester Block (2) auswechselbar in der Wandung (1) des Behälters angeordnet ist, wobei der Block (2) einen Durchgangskanal (3) aufweist, der zur Aufnahme eines Thermoelementes (5) vorgesehen und an dem innerhalb des Behälters befindlichen Ende durch eine Schutzkappe (6) für das Thermoelement verschlossen ist und die Kappe aus BN-Keramikmaterial geformt ist, das 50 Gew.% oder mehr BN und 1 Gew.% oder mehr und weniger als 50 Gew.% AℓN enthält.

2. Ein Behälter nach Anspruch 1, der zusätzlich ein Aluminiumoxid-Schutzrohr (4) zur Aufnahme des sich in den Durchgangskanal (3) hineinerstreckenden Thermoelements (5) aufweist, wobei das innerhalb des Behälters befindliche Ende des Rohres (4) durch die Schutzkappe (6) verschlossen ist.

3. Ein Behälter nach Anspruch 1 oder 2, in welchem die Schutzkappe (6) eine Glasbeschichtung (8) auf ihrer Außenfläche aufweist.

4. Ein Behälter nach wenigstens einem vorhergehenden Anspruch, in welchem die Schutzkappe (6) durch eine um sie herum angeordnete offene rohrförmige Schutzkonstruktion gegen Stoßbeanspruchungen geschützt ist.

5. Ein Behälter für geschmolzenes Metall nach wenigstens einem vorhergehenden Anspruch, in welchem das BN-Keramikmaterial 50 Gew.% oder mehr BN, 1 Gew.% oder mehr und weniger als 50 Gew.% AℓN und Y₂O₃ enthält, dessen Gewichtsverhältnis relativ zum AℓN-Anteil 1,0 bis 10,0 % ist.

6. Ein Behälter für geschmolzenes Metall nach wenigstens einem vorhergehenden Anspruch, in welchem ein Teil oder die Gesamtmenge des Ausgangsmaterials für die BN-Komponente im Keramikmaterial amorphes BN-Pulver ist.

7. Ein Behälter für geschmolzenes Metall nach einem der Ansprüche 1 bis 5, in welchem ein Teil oder die Gesamtmenge des Ausgangsmaterials für die BN-Komponente im Keramikmaterial Pulvermaterial ist, welches beim Sintern amorphes BN erzeugt.

## Revendications

1. Récipient pour métal en fusion auquel est associé un moyen pour placer un thermocouple (5) à l'intérieur d'un corps de métal en fusion dans le récipient, caractérisé en ce que un bloc réfractaire (2) est ajusté de façon remplaçable dans la paroi (1) du récipient, le bloc (2) comportant un passage (3) traversant pour loger un thermocouple (5), et étant fermé en son extrémité située à l'intérieur du récipient par un capuchon protection (6) pour ledit thermocouple, le capuchon étant fait d'un matériau céramique au BN, contenant 50%en poids, ou davantage, de BN et 1%, ou plus, et moins que 50%, de AlN.

2. Récipient suivant la revendication 1, comportant en plus un tube protecteur (4) en alumine, pour loger ledit thermocouple (5), qui s'étend dans le passage traversant (3), l'extrémité du tube (4) à l'intérieur du récipient étant couverte par le capuchon protecteur (6).

3. Récipient suivant la revendication 1 ou 2, dans lequel le capuchon protecteur (6) comporte un revêtement en verre (8) sur sa surface externe.

4. Récipient suivant l'une quelconque des précédentes revendications, dans lequel le capuchon protecteur (6) est protégé contre les chocs par une structure tubulaire ouverte formant barrage autour de lui.

5. Récipient pour métal en fusion conforme à l'une quelconque des précédentes revendications, dans lequel ledit matériau céramique au BN consiste en 50% en poids, ou plus, de BN, 1% en poids ou plus, et moins que 50% en poids, de AlN, et du Y₂O₃ dont la proportion en poids par rapport audit contenu en AlN est de 1,0 à 10,0%.

6. Récipient pour métal en fusion suivant l'une quelconque des précédentes revendications, dans lequel une partie ou tout le matériau de départ pour le composant au BN dans ledit matériau céramique est de la poudre amorphe de BN.

7. Récipient pour métal en fusion selon l'une quelconque des revendications 1 à 5, dans lequel une partie ou tout le matériau de départ pour le composant au BN dans ledit matériau céramique'est un matériau en poudre qui produit du BN amorphe en cours de frittage.
